# FASCICULE DE BREVET EUROPEEN

(11) **EP 3 018 777 B1**
(45) Date de publication et mention de la délivrance du brevet: **18.10.2017**
(21) Numéro de dépôt: 14192009.0
(22) Date de dépôt: 06.11.2014
(51) Int. Cl.: H02G 1/04

(54) **Dispositif et procédé de levage d'un câble monté sur pylônes**
Vorrichtung und Verfahren zum Entfernen eines auf Strommasten montierten Kabels
Device and method for lifting a cable mounted on pylons

(43) Date de publication de la demande: 11.05.2016
(73) Titulaire: RTE Réseau de Transport d'Electricité, 92919 Paris La Défense Cedex (FR)
(72) Inventeur: Lopez, Stéphane, 13470 Carnoux-en-Provence (FR)
(74) Mandataire: Bonnet, Michel

(56) Documents cités:
- WO-A1-2013/008234
- US-A- 4 301 994
- US-A- 5 941 507
- US-A1- 2014 138 496
- US-B1- 6 375 163

## Description

La présente invention concerne un dispositif de levage d'un câble monté sur pylônes, ce dispositif étant destiné à être suspendu à l'extrémité libre d'une élingue. Elle concerne également un procédé de levage utilisant un tel dispositif. Un tel dispositif selon l'état de la technique est décrit dans US 2014/0138496. Dans ce document, un dispositif de levage d'un câble est décrit qui comporte un réa de poulie, un élément porteur de l'axe de rotation du réa de poulie et un bras de verrouillage. Elle s'applique en particulier, mais pas uniquement, au domaine de la construction et de la maintenance de lignes de transmission d'électricité à haute tension dans lesquelles des câbles de transport d'énergie électrique sont montés sur des pylônes successifs. Certaines opérations nécessitent par exemple le remplacement d'un pylône tout en maintenant sur les autres pylônes un ou plusieurs câbles portés notamment sur le pylône destiné à être remplacé. Pour ce faire, il est généralement procédé au levage du câble, de manière à le désolidariser du pylône à remplacer, à l'aide d'un engin de levage tel qu'un hélicoptère auquel est suspendue une élingue à l'extrémité libre de laquelle est fixé un dispositif de levage.

L'invention s'applique plus généralement à tout domaine dans lequel un câble monté sur pylônes doit être soulevé, par exemple pour être désolidarisé de l'un des pylônes, quel que soit l'engin de levage utilisé (hélicoptère, grue ou autres).

Selon une première solution généralement préconisée, il est connu d'utiliser un dispositif de levage de type grappin. Le grappin est suspendu à une élingue et amené au voisinage du câble à l'aide d'un engin porteur de l'élingue, par exemple un hélicoptère. Mais cette solution présente plusieurs inconvénients :
- compte tenu des dimensions générales d'un grappin, il n'est pas aisé d'attraper le câble à coup sûr,
- toute tentative pour attraper le câble est susceptible de l'endommager à cause des chocs possibles entre les éléments du grappin, tels que sa tige ou ses crochets, et le câble, ou à cause des rotations possibles du grappin sur lui-même,
- une fois que le câble est attrapé, la surface de contact entre le grappin et le câble est trop faible et de courbure également trop faible, de sorte que le câble risque d'être endommagé par une concentration des contraintes,
- le grappin pivote pendant l'opération de levage sous l'effet des tensions verticales imposées par l'élingue portée vers le haut, d'une part, et le câble résistant à cause de son poids, d'autre part, de sorte qu'il travaille alors en flexion et qu'il est nécessaire de le dimensionner suffisamment pour le rendre résistant : il en découle un matériel trop lourd pour assurer une utilisation simple.

Selon une deuxième solution également préconisée, il est connu d'utiliser un dispositif de levage de type poulie de déroulage. Une poulie de déroulage est généralement destinée à des opérations de déroulage de câble héliporté, fixée sur un pylône, mais son utilisation peut être détournée pour le levage de câble. Elle est alors suspendue à une élingue et amenée au voisinage du câble à l'aide d'un engin porteur de l'élingue, par exemple un hélicoptère.

Une telle poulie de déroulage, comme par exemple celles vendues par la société Tesmec, comporte :
- un réa de poulie,
- un élément porteur de l'axe de rotation du réa de poulie, et
- un bras de guidage du câble vers une gorge du réa de poulie, l'axe principal de ce bras de guidage s'étendant incliné vers le haut, dans un plan contenant l'axe de rotation du réa de poulie, lorsque la poulie de déroulage est suspendue à l'élingue.

L'élément porteur est ouvert sur un côté, permettant ainsi le passage du câble, et ce dernier est guidé vers la gorge du réa de poulie grâce au bras de guidage. Cela permet d'attraper le câble plus facilement.

Un autre avantage de cette deuxième solution par rapport à la première est de réduire les risques d'endommagement du câble compte tenu de la surface arrondie du réa de poulie, pour une meilleure répartition des contraintes, et de sa liberté en rotation, ce qui lui permet de rouler sur le câble.

Mais cette deuxième solution présente elle aussi quelques inconvénients. Tout d'abord, la poulie de déroulage a tendance à tourner sur elle-même une fois élevée dans les airs. Cette rotation gêne l'opérateur car elle ne s'arrête qu'au moment de la rencontre entre le câble et la poulie. Cela ne facilite pas l'approche du dispositif de levage et peut abîmer le câble à cause des chocs possibles dus à l'inertie et à la géométrie du matériel employé. Ceci vient du fait que la poulie de déroulage est conçue pour être fixée sur un pylône et non pas suspendue dans les airs.

Par ailleurs, lorsque la poulie de déroulage est en contact avec le câble, elle n'est pas nécessairement bien disposée géométriquement, de sorte qu'en la soulevant son bras de guidage n'est pas toujours correctement orienté pour attraper le câble. En outre, l'ouverture de l'élément porteur n'est pas non plus nécessairement du bon côté. Finalement, la zone dans laquelle le câble doit se trouver par rapport à la poulie de déroulage pour être guidé vers la gorge de son réa est assez restreinte ; elle est limitée à un secteur angulaire délimité par l'extrémité de son bras de guidage et la circonférence de son réa. Tout ceci constitue une perte de temps potentielle lors d'une opération de levage et augmente les risques d'endommagement du câble en répétant l'opération.

En outre, une poulie de déroulage comporte généralement un linguet automatique par lequel le câble doit passer pour se positionner dans la gorge du réa. Un tel linguet n'est pas approprié, notamment lorsque l'on souhaiter libérer le câble en fin d'opération de construction de ligne ou de maintenance. Enlever ce linguet n'est pas non plus satisfaisant puisque cela implique alors l'usage d'un matériel non certifié pour une opération risquée.

Enfin, les poulies de déroulage existantes sont généralement surdimensionnées pour une opération de levage, ce qui les rend peu pratiques car trop lourdes pour cet emploi détourné.

Il peut ainsi être souhaité de prévoir un dispositif de levage de câble qui permette de s'affranchir d'au moins une partie des problèmes et contraintes précités.

Il est donc proposé un dispositif de levage d'un câble monté sur pylônes, le dispositif étant destiné à être suspendu à l'extrémité libre d'une élingue et comportant :
- un réa de poulie,
- un élément porteur de l'axe de rotation du réa de poulie, et
- un bras de guidage du câble vers une gorge du réa de poulie, l'axe principal de ce bras de guidage s'étendant incliné vers le haut, dans un plan contenant l'axe de rotation du réa de poulie, lorsque le dispositif de levage est suspendu à l'élingue,
comportant en outre une plaque de guidage, s'étendant dans un plan destiné à contenir l'élingue, dont une extrémité est fixée à l'élément porteur de manière à maintenir le plan dans lequel s'étend la plaque de guidage sensiblement perpendiculaire au plan contenant l'axe de rotation du réa de poulie et l'axe du bras de guidage.

Ainsi, tout en conservant l'avantage de comporter un réa de poulie et un bras de guidage pour diriger le câble vers ladite gorge du réa de poulie, un dispositif de levage selon l'invention est capable de s'orienter convenablement par rapport au câble de façon automatique dès le premier contact grâce à sa plaque de guidage. En effet, le plan de la plaque de guidage étant sensiblement perpendiculaire au plan contenant l'axe de rotation du réa de poulie et l'axe du bras de guidage, l'orientation automatique de ce plan de plaque de guidage parallèlement au câble par simple contact entre les deux permet de positionner le câble de façon optimale par rapport à ladite gorge du réa de poulie et au bras de guidage. Il suffit juste d'être dans le bon demi-espace incluant le bras de guidage. La zone dans laquelle le câble doit se trouver par rapport au dispositif de levage pour être guidé vers ladite gorge de son réa de poulie est donc étendue à un demi-espace.

De façon optionnelle, la fixation de ladite extrémité de la plaque de guidage à l'élément porteur se fait à l'aide d'une liaison pivot dont l'axe de rotation est parallèle au plan de la plaque de guidage.

De façon optionnelle également, un dispositif de levage d'un câble selon l'invention peut comporter :
- un premier réa de poulie,
- un premier élément porteur de l'axe de rotation du premier réa de poulie,
- un premier bras de guidage du câble vers une gorge du premier réa de poulie, ce premier bras de guidage s'étendant incliné vers le haut, dans un plan contenant l'axe de rotation du premier réa de poulie, lorsque le dispositif de levage est suspendu à l'élingue,
- un deuxième réa de poulie,
- un deuxième élément porteur de l'axe de rotation du deuxième réa de poulie, et
- un deuxième bras de guidage du câble vers une gorge du deuxième réa de poulie, ce deuxième bras de guidage s'étendant incliné vers le haut, dans un plan contenant l'axe de rotation du deuxième réa de poulie, lorsque le dispositif de levage est suspendu à l'élingue,
dans lequel :
- ladite extrémité de la plaque de guidage est fixée au premier élément porteur, et
- les deux éléments porteurs sont fixés l'un à l'autre de manière à maintenir coplanaires les axes de rotation de leurs réas de poulies et de sorte que les deux bras de guidage s'étendent de part et d'autre du plan dans lequel s'étend la plaque de guidage, le deuxième élément porteur étant disposé sous le premier élément porteur lorsque le dispositif de levage est suspendu à l'élingue.

On assure ainsi le succès de l'opération de levage du premier coup puisque la zone dans laquelle le câble doit se trouver par rapport au dispositif de levage pour être guidé vers la gorge de l'un de ses réas de poulies est étendue à l'espace entier.

De façon optionnelle également, les deux éléments porteurs sont fixés l'un à l'autre à l'aide d'une liaison pivot dont l'axe de rotation est parallèle au plan dans lequel s'étend la plaque de guidage.

De façon optionnelle également, chaque élément porteur est en forme de crochet en « G », par exemple constitué de deux flasques rapportés l'un contre l'autre, à l'intérieur duquel est fixé le réa de poulie correspondant selon une liaison pivot.

De façon optionnelle également, la plaque de guidage est en forme oblongue de poire à deux extrémités, la première extrémité étant anguleuse et la deuxième extrémité, arrondie, correspondant à ladite extrémité de fixation.

De façon optionnelle également, la plaque de guidage et chaque élément porteur présente des évidements.

De façon optionnelle également, un dispositif de levage d'un câble selon l'invention peut comporter un crochet ou mousqueton supplémentaire de levée de charge fixé à l'un des autres éléments constitutifs du dispositif de levage de manière à se trouver en dessous de tous ces éléments lorsque le dispositif de levage est suspendu à l'élingue.

Il est également proposé un procédé de levage d'un câble monté sur pylônes, comportant les étapes suivantes :
- fixation, à l'extrémité libre d'une élingue portée par un engin de levage, d'un dispositif de levage d'un câble selon l'invention, puis
- déplacement, à l'aide de l'engin de levage, du dispositif de levage vers le câble en maintenant le dispositif de levage essentiellement sous le câble et en établissant un contact entre le câble et l'élingue ou la plaque de guidage, puis
- remontée, à l'aide de l'engin de levage, du dispositif de levage en maintenant le contact avec le câble.

De façon optionnelle, le câble est un câble de ligne de transmission d'électricité à haute tension et l'engin de levage est un hélicoptère porteur de l'élingue.

L'invention sera mieux comprise à l'aide de la description qui va suivre, donnée uniquement à titre d'exemple et faite en se référant aux dessins annexés dans lesquels :
- la figure 1 représente une installation dans laquelle un dispositif de levage d'un câble monté sur pylônes selon l'invention est utilisé,
- la figure 2 représente schématiquement et en perspective un dispositif de levage d'un câble monté sur pylônes, selon un premier mode de réalisation de l'invention,
- la figure 3 représente schématiquement et en perspective un dispositif de levage d'un câble monté sur pylônes, selon un deuxième mode de réalisation de l'invention,
- la figure 4 représente en vue de face une portion d'élément porteur du dispositif de levage de la figure 2 ou 3,
- les figures 5 et 6 illustrent deux configurations possibles de positionnement du dispositif de levage de la figure 3 par rapport à un câble à soulever, et
- la figure 7 illustre les étapes successives d'un procédé de levage d'un câble monté sur pylônes, selon un mode de réalisation de l'invention.

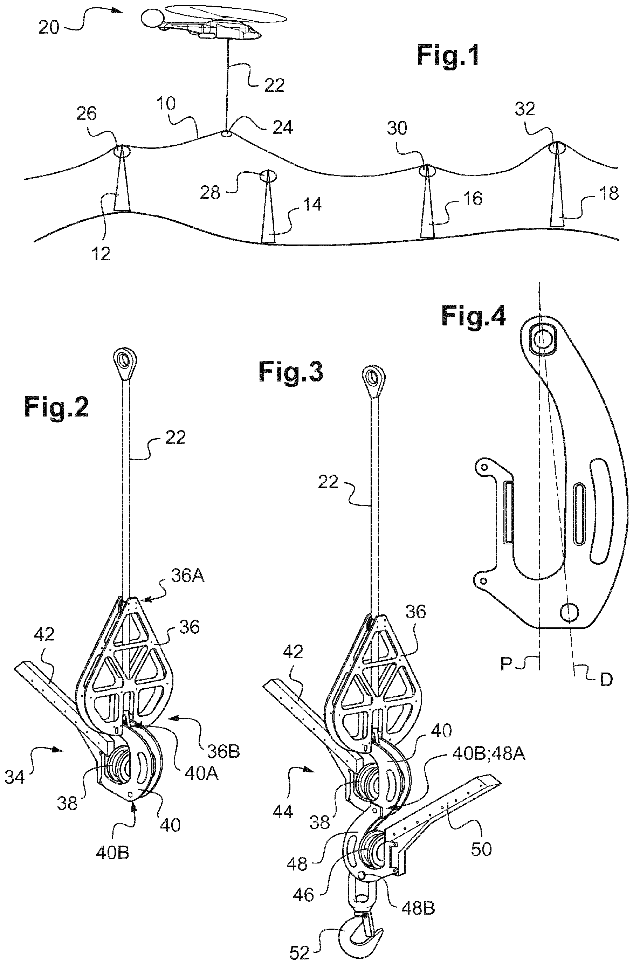

La figure 1 illustre une installation de transmission de courant électrique à haute tension à l'aide d'un câble 10 monté sur des pylônes successifs dont quatre sont représentés et référencés 12, 14, 16, 18. Pour une opération quelconque de construction ou de maintenance, le câble 10 doit être soulevé à l'aide d'un engin de levage, par exemple un hélicoptère 20 sous lequel est accrochée une élingue 22 dont l'extrémité libre est munie d'un dispositif 24 de levage du câble 10.

Comme cela est bien connu dans le domaine de la gestion des installations de transmission de courant électrique à haute tension, avant toute intervention sur le câble 10 nécessitant de le soulever, des poulies de déroulage 26, 28, 30, 32 sont installées respectivement aux sommets des pylônes 12, 14, 16, 18 et le câble 10 est disposé sur ces poulies par un opérateur.

Ensuite, comme illustré sur la figure 1, le câble 10 est soulevé, à l'aide de l'hélicoptère 20, de son élingue 22 et du dispositif de levage 24, de manière à libérer au moins l'un des pylônes, par exemple le pylône 14. C'est lors de cette étape qu'il peut être difficile d'attraper le câble 10 à l'aide d'un dispositif de levage conventionnel, tel qu'un grappin ou une poulie de déroulage détournée de son usage habituel.

Une fois saisi et soulevé, le câble 10 est alors posé à terre le temps de travailler sur le pylône 14 libéré, en vue de sa maintenance, son remplacement ou autre.

En fin d'opération de construction ou de maintenance, le câble 10 est réinstallé sur une poulie de déroulage fixée au sommet d'un nouveau pylône, ou sur la poulie de déroulage 28 du pylône 14 si ce dernier est resté en place, par une manoeuvre de l'hélicoptère 20 inverse de celle ayant permis de soulever le câble 10 et de le poser à terre.

Les poulies de déroulage peuvent alors être désinstallées par un opérateur pour finaliser l'installation du câble 10 sur les pylônes.

Un premier mode de réalisation selon l'invention, portant la référence 34, du dispositif de levage 24 de la figure 1 est illustré sur la figure 2. Il comporte une plaque de guidage 36, un réa de poulie 38 formé d'une roue à gorge, un élément 40 porteur de l'axe de rotation du réa de poulie 38 et fixé à la plaque de guidage 36, ainsi qu'un bras de guidage 42 s'étendant, à partir d'une extrémité libre de l'élément porteur 40, de telle sorte que son axe principal soit incliné vers le haut lorsque le dispositif de levage 34 est suspendu à l'élingue 22, au moins légèrement de manière à former une pente, dans un plan vertical contenant également l'axe de rotation du réa de poulie 38.

Plus précisément, la plaque de guidage 36 présente une première extrémité supérieure 36A munie de moyens de réception de l'élingue 22. Ces moyens de réception sont conventionnels et peuvent prendre de multiples formes. Ils présentent par exemple un trou traversant dont l'axe est inclus dans le plan de la plaque de guidage 36, permettant ainsi le passage de l'élingue 22 de sorte que celle-ci puisse s'étendre dans ce plan. En particulier, lorsque la plaque de guidage 36 est formée de deux flasques rapportés l'un contre l'autre, les moyens de réception de l'extrémité supérieure 36A peuvent prendre la forme d'une entretoise disposée entre les deux flasques, cette entretoise présentant un alésage dans lequel passe l'élingue 22 : cette dernière peut ainsi s'étendre entre les deux flaques, ce qui correspond à l'illustration de la figure 1.

La plaque de guidage 36 s'étend dans un plan sur une surface suffisante pour, lorsqu'elle est en contact avec le câble 10, être automatiquement orientée de sorte que ce plan soit parallèle au câble 10 en étant ramené contre lui. En d'autres termes, elle présente en pratique une certaine épaisseur et deux faces de contact, mais cette épaisseur est suffisamment faible devant la surface plane qu'elle occupe principalement dans le plan précité pour qu'un contact avec le câble 10 tende à rapprocher l'une de ses deux faces contre lui.

La plaque de guidage 36 présente une deuxième extrémité inférieure 36B munie de moyens de fixation à l'élément porteur 40. De préférence, ces moyens de fixation permettent une liaison pivot entre la plaque de guidage 36 et l'élément porteur 40, l'axe de cette liaison pivot étant parallèle au plan dans lequel la plaque de guidage 36 s'étend. Cet axe est par exemple matérialisé par un pion s'étendant dans la plaque de guidage 36, entre ses deux flasques, libre en rotation entre deux butées. Toute autre variante de réalisation des moyens de fixation de la deuxième extrémité inférieure 36B permettant une telle liaison pivot est envisageable. Dans le mode de réalisation de la figure 2, les moyens de fixation de l'élément porteur 40 à la plaque de guidage 36 remplissent en outre une fonction de fixation de l'élingue 22 au dispositif de levage 34. Selon un exemple non limitatif, lorsque l'élingue 22 est un câble, par exemple en textile tressé, dont l'extrémité fixée sous l'hélicoptère 20 est une cosse coeur et dont l'autre extrémité libre prend la forme d'une cosse ronde épaulée, cette dernière peut être montée autour de l'axe de la liaison pivot entre la plaque de guidage 36 et l'élément porteur 40. Ainsi, l'élingue 22 traverse la plaque de guidage 36 sur toute sa hauteur entre ses deux flasques, en étant guidée par les moyens de réception au niveau de l'extrémité supérieure 36A et en étant accrochée à l'axe de la liaison pivot mentionné ci-dessus au niveau de l'extrémité inférieure 36B. D'une façon plus générale, les moyens de fixation de l'élingue 22 au dispositif de levage 34 sont conventionnels et peuvent prendre de multiples formes. Ils doivent être conçus de façon suffisamment sécurisée pour supporter, sans risque de rupture et chute, les poids du dispositif de levage 34 et du câble 10.

Dans l'exemple de la figure 2, la plaque de guidage 36 est en forme oblongue de poire, l'extrémité anguleuse de cette forme de poire correspondant à la première extrémité supérieure 36A et l'extrémité opposée arrondie et élargie correspondant à la deuxième extrémité inférieure 36B. Cette forme de poire est avantageuse pour accompagner le rapprochement de l'une des faces de contact de la plaque de guidage 36 contre le câble 10 sans l'endommager lorsque le dispositif de levage 34 est guidé vers le câble 10 par l'hélicoptère 20. De façon avantageuse également, la plaque de guidage 36 est évidée de manière à réduire son poids sans réduire sa surface plane de contact.

L'élément porteur 40 s'étend lui aussi dans un plan, maintenu sensiblement perpendiculaire à celui de la plaque de guidage 36 grâce à la liaison pivot qui le maintient suspendu à la deuxième extrémité inférieure 36B de la plaque de guidage 36. Par « sensiblement perpendiculaire », il est entendu « formant un angle de π/2 à +/- 10% près ». L'élément porteur 40 est par exemple, comme illustré sur la figure 2, constitué de deux flasques rapportés l'un contre l'autre. Ces deux flasques ont par exemple une forme de crochet en « G », le sommet 40A du « G » présentant un trou traversé par l'axe de la liaison pivot avec la plaque de guidage 36. Le bras médian retourné vers l'intérieur du « G » correspond quant à lui à l'axe de rotation du réa de poulie 38 ainsi maintenu dans un plan sensiblement perpendiculaire à celui de la plaque de guidage 36 quelle que soit la position en rotation de l'élément porteur 40 autour de l'axe de sa liaison pivot avec la plaque de guidage 36.

Le réa de poulie 38 est ainsi logé à l'intérieur du crochet en « G » que forme l'élément porteur 40, l'ouverture latérale de ce crochet en « G » au-dessus de son bras médian permettant en outre le passage du câble 10 pour son positionnement dans la gorge du réa de poulie 38, laquelle gorge s'étend circulairement dans un plan perpendiculaire à son axe de rotation. La plaque 36 remplit donc effectivement sa fonction de guidage puisqu'elle ramène automatiquement par contact avec le câble 10 la gorge du réa de poulie 38 dans la bonne direction, celle-ci s'étendant alors dans un plan parallèle au câble 10. Il suffit que ce câble 10 soit dans le bon demi-espace délimité par le plan de la plaque de guidage 36, c'est-à-dire dans le demi-espace situé du côté de l'ouverture latérale du crochet en « G » que forme l'élément porteur 40, pour que son engagement dans la gorge du réa de poulie 38 soit facilité.

De façon optionnelle dans le mode de réalisation de la figure 2, la base 40B du crochet en « G » que forme l'élément porteur 40 peut comporter un trou traversant permettant d'assurer l'accrochage d'un autre élément.

Dans le mode de réalisation de la figure 2 également, le bras de guidage 42 s'étend, à partir de l'extrémité libre de l'élément porteur 40 située à la base de son ouverture latérale, dans le plan de l'élément porteur 40 et donc de l'axe du réa de poulie 38. Il est suffisamment long pour limiter le risque que le câble 10 s'échappe de la gorge du réa de poulie 38 une fois qu'il y est installé.

Un deuxième mode de réalisation selon l'invention, portant la référence 44, du dispositif de levage 24 de la figure 1 est illustré sur la figure 3. Comme dans le mode de réalisation précédent, il comporte la plaque de guidage 36 traversée sur toute sa hauteur par l'élingue 22, le réa de poulie 38, l'élément 40 porteur de l'axe de rotation du réa de poulie 38 et fixé à la plaque de guidage 36 ainsi qu'à l'élingue 22, et le bras de guidage 42 s'étendant, à partir d'une extrémité libre de l'élément porteur 40, de telle sorte que son axe principal soit incliné vers le haut lorsque le dispositif de levage 44 est suspendu à l'élingue 22, au moins légèrement de manière à former une pente, dans un plan vertical contenant également l'axe de rotation du réa de poulie 38. Mais il comporte en outre un deuxième réa de poulie 46, un deuxième élément 48 porteur de l'axe de rotation du deuxième réa de poulie 46 et fixé à la base 40B de l'élément porteur 40, ainsi qu'un deuxième bras de guidage 50 s'étendant, à partir d'une extrémité libre du deuxième élément porteur 48, de telle sorte que son axe principal soit incliné vers le haut lorsque le dispositif de levage 44 est suspendu à l'élingue 22, au moins légèrement de manière à former une pente, dans un plan vertical contenant également l'axe de rotation du deuxième réa de poulie 46.

Le deuxième élément porteur 48 s'étend dans le même plan que l'élément porteur 40, grâce à une liaison pivot qui le maintient suspendu à la base 40B de l'élément porteur 40. Il est par exemple, comme illustré sur la figure 2, identique à l'élément porteur 40, c'est-à-dire constitué de deux flasques rapportés l'un contre l'autre. Ces deux flasques ont une forme de crochet en « G », le sommet 48A du « G » présentant un trou traversant disposé de façon coaxiale par rapport au trou traversant de la base 40B de l'élément porteur 40. Ces trous sont traversés par un axe de rotation, par exemple formé d'un pion à butées, parallèle au plan de la plaque de guidage 36. Le bras médian du « G » du deuxième élément porteur 48 correspond quant à lui à l'axe de rotation du deuxième réa de poulie 46 ainsi maintenu dans un plan sensiblement perpendiculaire à celui de la plaque de guidage 36 quelle que soit la position en rotation du deuxième élément porteur 48 autour de l'axe de sa liaison pivot avec l'élément porteur 40. Les deux axes de rotation des deux réas de poulies 38 et 46 sont alors coplanaires.

Le deuxième réa de poulie 46 est ainsi logé à l'intérieur du crochet en « G » que forme le deuxième élément porteur 48, l'ouverture latérale de ce crochet en « G » étant orientée en sens inverse de celle de l'élément porteur 40. Cette ouverture latérale permet le passage du câble 10 pour son positionnement dans la gorge du deuxième réa de poulie 46, laquelle gorge s'étend circulairement dans un plan perpendiculaire à son axe de rotation. La plaque 36 remplit donc toujours sa fonction de guidage puisqu'elle ramène automatiquement par contact avec le câble 10 la gorge du deuxième réa de poulie 46 dans la bonne direction, celle-ci s'étendant alors dans un plan parallèle au câble 10. Il suffit que ce câble 10 soit dans le bon demi-espace délimité par le plan de la plaque de guidage 36, c'est-à-dire dans le demi-espace situé du côté de l'ouverture latérale du crochet en « G » que forme le deuxième élément porteur 48, pour que son engagement dans la gorge du deuxième réa de poulie 46 soit facilité.

Dans ce deuxième mode de réalisation, le fait que l'on dispose de deux éléments porteurs 40, 48 dont les ouvertures latérales sont en sens opposés par rapport au plan de la plaque de guidage 36 permet d'assurer l'engagement du câble 10 dans l'une des deux gorges de réas de poulies 38, 48 du premier coup quelle que soit la position relative du câble 10 par rapport à la plaque de guidage 36. En effet, il se trouve nécessairement dans l'un des deux demi-espaces délimités par le plan de la plaque de guidage 36 et est donc aisément engagé soit vers le réa de poulie 38 accessible à partir de l'un de ces deux demi-espaces, soit vers le deuxième réa de poulie 46 accessible à partir de l'autre de ces deux demi-espaces.

Dans le mode de réalisation de la figure 3, la base 48B du crochet en « G » que forme le deuxième élément porteur 48 comporte un axe pivot à entretoise permettant d'assurer l'accrochage d'un autre élément. Cet autre élément est par exemple un crochet ou mousqueton 52 permettant l'accrochage de charges supplémentaires au dispositif de levage 44. Ainsi, lorsque le dispositif de levage 44 est suspendu à l'élingue 22, ce crochet ou mousqueton 52 se trouve en-dessous de tous les autres éléments 36, 38, 40, 42, 46, 48 et 50 constitutifs du dispositif de levage 44.

Dans le mode de réalisation de la figure 3 également, le deuxième bras de guidage 50 s'étend, à partir de l'extrémité libre du deuxième élément porteur 48 située à la base de son ouverture latérale, dans le plan du deuxième élément porteur 48 et donc de l'axe du deuxième réa de poulie 46. Il s'étend dans un sens opposé à celui du bras de guidage 42, de sorte que, lorsque le dispositif de levage 44 est suspendu à l'élingue 22, les deux bras de guidage 42, 50 s'étendent de part et d'autre du plan dans lequel s'étend la plaque de guidage 36. Il est par ailleurs suffisamment long pour limiter le risque que le câble 10 s'échappe de la gorge du deuxième réa de poulie 46 une fois qu'il y est installé.

L'un quelconque des flasques en forme de « G » des éléments porteurs 40 et 48 est représenté en vue de face sur la figure 4 pour montrer que l'axe D qui relie les centres des deux trous formés respectivement au sommet et à la base de l'élément porteur 40 ou 48 n'est pas tout à fait dans le plan P de la gorge du réa de poulie 38 ou 46. Un décalage de quelques degrés permet d'optimiser la répartition des contraintes de traction dans le dispositif de levage 34 ou 44, ce qui permet alors d'alléger le dispositif.

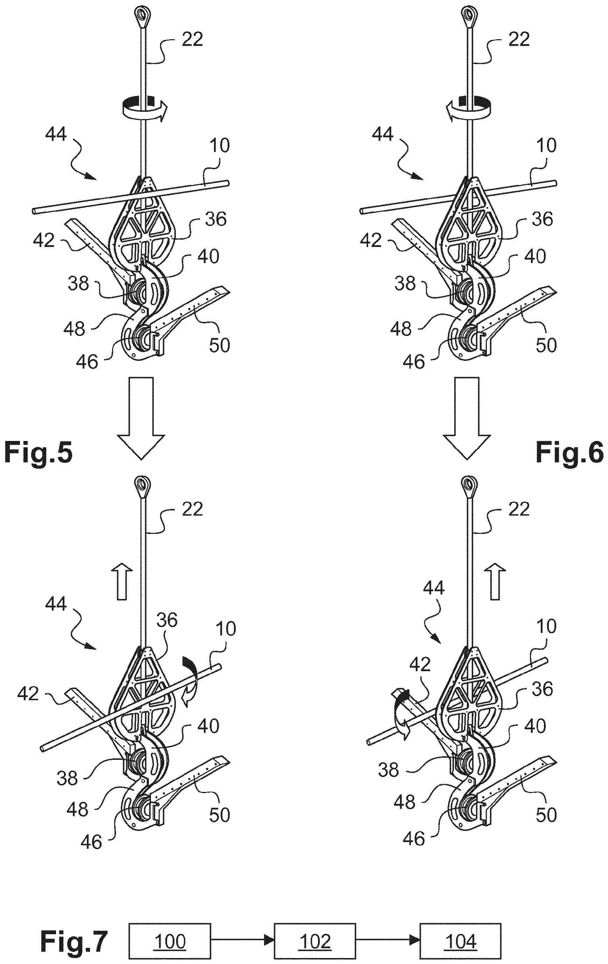

La figure 5 illustre une première configuration d'utilisation du dispositif de levage 44. Selon cette première configuration, le dispositif de levage 44 est disposé derrière le câble 10 de sorte que ce dernier est situé dans le demi-espace vers lequel est orientée l'ouverture latérale du deuxième élément porteur 48. En partie supérieure de la figure 5, le dispositif de levage 44 reste essentiellement sous le câble 10. En établissant un contact entre le câble 10 et la plaque de guidage 36, celle-ci pivote autour de l'axe de l'élingue 22 de manière à ramener le plan de sa face de contact correspondante contre le câble 10. Comme illustré en partie inférieure de la figure 5, en remontant le dispositif de levage 44 et en maintenant autant que possible le contact entre le câble 10 et la plaque de guidage 36, on parvient à engager aisément le câble 10 dans la gorge du deuxième réa de poulie 46, grâce également au deuxième bras de guidage 50.

La figure 6 illustre une deuxième configuration d'utilisation du dispositif de levage 44. Selon cette deuxième configuration, le dispositif de levage 44 est disposé devant le câble 10 de sorte que ce dernier est situé dans le demi-espace vers lequel est orientée l'ouverture latérale de l'élément porteur 40. En partie supérieure de la figure 6, le dispositif de levage 44 reste essentiellement sous le câble 10. En établissant un contact entre le câble 10 et la plaque de guidage 36, celle-ci pivote autour de l'axe de l'élingue 22 de manière à ramener le plan de sa face de contact correspondante contre le câble 10. Comme illustré en partie inférieure de la figure 6, en remontant le dispositif de levage 44 et en maintenant autant que possible le contact entre le câble 10 et la plaque de guidage 36, on parvient à engager aisément le câble 10 dans la gorge du réa de poulie 38, grâce également au bras de guidage 42.

Les figures 5 et 6 illustrent les deux seules configurations possibles auxquelles on peut être confronté dans l'utilisation du dispositif de levage 44. Cela montre bien que grâce à ce dispositif 44, il est aisément possible de récupérer et soulever le câble 10 du premier coup sans l'endommager. A minima, le dispositif de levage 34 permet de réussir l'opération une fois sur deux.

Les étapes successives d'un procédé de levage de câble selon l'invention vont maintenant être détaillées en référence à la figure 7.

Au cours d'une première étape 100, le dispositif de levage 34 ou 44 est assemblé. L'élément 40 porteur du réa de poulie 38 et du bras de guidage 42 est monté en liaison pivot sur l'extrémité inférieure 36B de la plaque de guidage 36 et fixé, par cette même liaison pivot, à l'extrémité libre de l'élingue 22 portée par un engin de levage tel que l'hélicoptère 20. Dans le cas du deuxième mode de réalisation de la figure 3, le deuxième élément 48 porteur du deuxième réa de poulie 46 et du deuxième bras de guidage 50 est monté en liaison pivot et en sens opposé sur la base 40B de l'élément porteur 40. Le crochet ou mousqueton 52 est éventuellement accroché à l'axe pivot de la base 48B du deuxième élément porteur 48. En fin d'assemblage et en suspension sous l'élingue 22, le crochet ou mousqueton 52 (du dispositif 44) est disposé sous le deuxième élément porteur 48 (du dispositif 44), lui-même disposé sous l'élément porteur 40 (du dispositif 34 ou 44), lui-même disposé sous la plaque de guidage 36 (du dispositif 34 ou 44) et suspendu à l'élingue 22. Dans cette disposition, il convient que le ou les bras de guidage 42, 50 ne s'étendent pas en hauteur au-delà de la partie inférieure de la plaque de guidage 36 pour ne pas gêner l'approche du câble 10.

Au cours d'une étape suivante d'approche 102, le dispositif de levage 34 ou 44 suspendu à l'élingue 22 est déplacé vers le câble 10, à l'aide de l'hélicoptère 20, en étant maintenu essentiellement sous le câble 10, de sorte que le premier contact établi avec le câble 10 se fasse au niveau de l'élingue 22 ou de la plaque de guidage 36, comme illustré en parties supérieures des figures 5 et 6.

Au cours d'une étape suivante d'élévation 104, le dispositif de levage 34 ou 44 est relevé en maintenant le contact avec le câble 10, comme illustré en parties inférieures des figures 5 et 6, pour engager le câble 10 dans l'une des gorges de réas de poulies 38, 46. L'opération fonctionne à coup sûr dans le cas du dispositif de levage 44 et avec un taux de succès à 50% dans le cas du dispositif de levage 34. Le câble 10 peut alors être désolidarisé de son pylône et posé à terre pour la suite des opérations.

On notera que, en tension sous l'élingue 22, tous les axes participant à la chaîne de reprise d'effort, c'est-à-dire les axes des extrémités 36B, 40A, 40B, 48A et 48B, s'alignent dans un même plan perpendiculaire à l'axe de rotation du réa de poulie 38 ou 46 porteur du câble 10. Cela permet entre autres d'avoir un alignement des éléments constitutifs du dispositif de levage 34 ou 44 de sorte qu'ils travaillent en traction ou compression plutôt qu'en flexion. Il en résulte une meilleure durée de vie de l'ensemble.

Il apparaît clairement qu'un dispositif de levage tel que l'un de ceux décrits précédemment permet de faciliter et accélérer toute opération de levage d'un câble monté sur pylônes. Par ailleurs un tel dispositif de levage peut être conçu de manière à présenter un encombrement et un poids réduits par rapport aux dispositifs existants, de manière à pouvoir être manipulé à bras d'homme par un seul opérateur.

On notera par ailleurs que l'invention n'est pas limitée aux modes de réalisation décrits précédemment.

Ainsi, dans les modes de réalisation détaillés précédemment, la suspension du dispositif de levage 34 ou 44 se fait par fixation de l'extrémité inférieure libre de l'élingue 22 à l'axe de la liaison pivot entre la plaque de guidage 36 et l'élément porteur 40. Mais d'autres modes de fixation de l'élingue 22 pourraient être envisagés. En particulier, l'élingue 22 pourrait être fixée à l'extrémité supérieure 36A de la plaque de guidage 36. Cependant dans ce cas, la plaque de guidage 36 participerait à la chaîne de reprise d'effort, ce qui n'est pas nécessairement avantageux.

En variante également, bien que chaque réa de poulie 38 ou 46 ait été illustré sous la forme d'une roue à gorge unique, une telle roue de réa peut comporter plusieurs gorges, pour le support simultané de plusieurs câbles par exemple.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif (24 ; 34 ; 44) de levage d'un câble (10) monté sur pylônes (12, 14, 16, 18), le dispositif étant destiné à être suspendu à l'extrémité libre d'une élingue (22) et comportant :
- un réa de poulie (38 ; 38, 46),
- un élément (40 ; 40, 48) porteur de l'axe de rotation du réa de poulie (38 ; 38, 46), et
- un bras (42 ; 42, 50) de guidage du câble (10) jusqu'à son engagement dans une gorge du réa de poulie (38 ; 38, 46), l'axe principal de ce bras de guidage (42 ; 42, 50) s'étendant incliné vers le haut, dans un plan contenant l'axe de rotation du réa de poulie (38 ; 38, 46), lorsque le dispositif de levage (24 ; 34 ; 44) est suspendu à l'élingue (22),
**caractérisé en ce qu'**il comporte en outre une plaque de guidage (36), s'étendant dans un plan destiné à contenir l'élingue (22), dont une extrémité (36B) est fixée à l'élément porteur (40) de manière à maintenir le plan dans lequel s'étend la plaque de guidage (36) sensiblement perpendiculaire au plan contenant l'axe de rotation du réa de poulie (38 ; 38, 46) et l'axe du bras de guidage (42 ; 42, 50).

2. Dispositif (24 ; 34 ; 44) de levage d'un câble (10) selon la revendication 1, dans lequel la fixation de ladite extrémité (36B) de la plaque de guidage (36) à l'élément porteur (40) se fait à l'aide d'une liaison pivot dont l'axe de rotation est parallèle au plan de la plaque de guidage (36).

3. Dispositif (24 ; 44) de levage d'un câble (10) selon la revendication 1 ou 2, comportant :
- un premier réa de poulie (38),
- un premier élément (40) porteur de l'axe de rotation du premier réa de poulie (38),
- un premier bras (42) de guidage du câble (10) vers une gorge du premier réa de poulie (38), ce premier bras de guidage (42) s'étendant incliné vers le haut, dans un plan contenant l'axe de rotation du premier réa de poulie (38), lorsque le dispositif de levage (24 ; 44) est suspendu à l'élingue (22),
- un deuxième réa de poulie (46),
- un deuxième élément (48) porteur de l'axe de rotation du deuxième réa de poulie (46), et
- un deuxième bras (50) de guidage du câble (10) vers une gorge du deuxième réa de poulie (46), ce deuxième bras de guidage (50) s'étendant incliné vers le haut, dans un plan contenant l'axe de rotation du deuxième réa de poulie (46), lorsque le dispositif de levage (24 ; 44) est suspendu à l'élingue (22),
dans lequel :
- ladite extrémité (36B) de la plaque de guidage (36) est fixée au premier élément porteur (40), et
- les deux éléments porteurs (40, 48) sont fixés l'un à l'autre de manière à maintenir coplanaires les axes de rotation de leurs réas de poulies (38, 46) et de sorte que les deux bras de guidage (42, 50) s'étendent de part et d'autre du plan dans lequel s'étend la plaque de guidage (36), le deuxième élément porteur (48) étant disposé sous le premier élément porteur (40) lorsque le dispositif de levage (24 ; 44) est suspendu à l'élingue (22).

4. Dispositif (24 ; 44) de levage d'un câble (10) selon la revendication 3, dans lequel les deux éléments porteurs (40, 48) sont fixés l'un à l'autre à l'aide d'une liaison pivot dont l'axe de rotation est parallèle au plan dans lequel s'étend la plaque de guidage (36).

5. Dispositif (24 ; 34 ; 44) de levage d'un câble (10) selon l'une quelconque des revendications 1 à 4, dans lequel chaque élément porteur (40 ; 40, 48) est en forme de crochet en « G », par exemple constitué de deux flasques rapportés l'un contre l'autre, à l'intérieur duquel est fixé le réa de poulie correspondant (38 ; 38, 46) selon une liaison pivot.

6. Dispositif (24 ; 34 ; 44) de levage d'un câble (10) selon l'une quelconque des revendications 1 à 5, dans lequel la plaque de guidage (36) est en forme oblongue de poire à deux extrémités, la première extrémité (36A) étant anguleuse et la deuxième extrémité (36B), arrondie, correspondant à ladite extrémité de fixation (36B).

7. Dispositif (24 ; 34 ; 44) de levage d'un câble (10) selon l'une quelconque des revendications 1 à 6, dans lequel la plaque de guidage (36) et chaque élément porteur (40 ; 40, 48) présente des évidements.

8. Dispositif (24 ; 34 ; 44) de levage d'un câble (10) selon l'une quelconque des revendications 1 à 7, comportant un crochet ou mousqueton supplémentaire (52) de levée de charge fixé à l'un des autres éléments constitutifs du dispositif de levage (24 ; 34 ; 44) de manière à se trouver en dessous de tous ces éléments lorsque le dispositif de levage (24 ; 34 ; 44) est suspendu à l'élingue (22).

9. Procédé de levage d'un câble (10) monté sur pylônes (12, 14, 16, 18), comportant les étapes suivantes :
- fixation (100), à l'extrémité libre d'une élingue (22) portée par un engin de levage (20), d'un dispositif (24 ; 34 ; 44) de levage d'un câble (10) selon l'une quelconque des revendications 1 à 8, puis
- déplacement (102), à l'aide de l'engin de levage (20), du dispositif de levage (24 ; 34 ; 44) vers le câble (10) en maintenant le dispositif de levage (24 ; 34; 44) essentiellement sous le câble (10) et en établissant un contact entre le câble (10) et l'élingue (22) ou la plaque de guidage (36), puis
- remontée (104), à l'aide de l'engin de levage (20), du dispositif de levage (24 ; 34 ; 44) en maintenant le contact avec le câble (10), jusqu'à l'engagement de ce dernier dans la gorge du réa de poulie (38 ; 38, 46) du dispositif de levage (24 ; 34 ; 44) par guidage à l'aide de la plaque (36) et du bras (42 ; 42, 50) de guidage.

10. Procédé de levage d'un câble (10) selon la revendication 9, dans lequel le câble (10) est un câble de ligne de transmission d'électricité à haute tension et l'engin de levage (20) est un hélicoptère porteur de l'élingue (22).

## Patentansprüche

1. Vorrichtung (24; 34; 44) zum Entfernen eines auf Strommasten (12, 14, 16, 18) montierten Kabels (10), wobei die Vorrichtung dazu bestimmt ist, an dem freien Ende eines Anschlagmittels (22) aufgehängt zu werden und umfassend:
- eine Riemenscheibenrolle (38; 38, 46),
- ein Tragelement (40; 40, 48) für die Drehachse der Riemenscheibenrolle (38; 38, 46), und
- einen Führungsarm (42; 42, 50) für das Kabel (10) bis zu dessen Eingriff in eine Nut der Riemenscheibenrolle (38; 38, 46), wobei sich die Hauptachse dieses Führungsarmes (42; 42, 50) auf einer Ebene schräg nach oben erstreckt, welche die Drehachse der Riemenscheibenrolle (38; 38, 46) enthält, wenn die Vorrichtung (24; 34; 44) zum Entfernen an dem Anschlagmittel (22) hängt,
**dadurch gekennzeichnet, dass** sie weiter eine Führungsplatte (36) umfasst, die sich über eine Ebene erstreckt, die dazu bestimmt ist, das Anschlagmittel (22) zu enthalten, von der ein Ende (36B) an dem Tragelement (40) befestigt ist, um die Ebene, über die sich die Führungsplatte (36) erstreckt, in etwa senkrecht zur Ebene zu halten, welche die Drehachse der Riemenscheibenrolle (38; 38, 46) und die Achse des Führungsarmes (42; 42, 50) enthält.

2. Vorrichtung (24; 34; 44) zum Entfernen eines Kabels (10) nach Anspruch 1, wobei die Befestigung des besagten Endes (36B) der Führungsplatte (36) an dem Tragelement (40) mithilfe einer Schwenkverbindung erfolgt, deren Drehachse parallel zur Ebene der Führungsplatte (36) verläuft.

3. Vorrichtung (24; 44) zum Entfernen eines Kabels (10) nach Anspruch 1 oder 2,
umfassend:
- eine erste Riemenscheibenrolle (38),
- ein erstes Tragelement (40) für die Drehachse der ersten Riemenscheibenrolle (38), und
- einen ersten Führungsarm (42) für das Kabel (10) zu einer Nut der ersten Riemenscheibenrolle (38), wobei sich dieser erste Führungsarm (42) auf einer Ebene schräg nach oben erstreckt, welche die Drehachse der ersten Riemenscheibenrolle (38) enthält, wenn die Vorrichtung (24; 44) zum Entfernen an dem Anschlagmittel (22) hängt,
- eine zweite Riemenscheibenrolle (46),
- ein zweites Tragelement (48) für die Drehachse der zweiten Riemenscheibenrolle (46), und
- einen zweiten Führungsarm (50) für das Kabel (10) zu einer Nut der zweiten Riemenscheibenrolle (46), wobei sich dieser zweite Führungsarm (50) auf einer Ebene schräg nach oben erstreckt, welche die Drehachse der zweiten Riemenscheibenrolle (46) enthält, wenn die Vorrichtung (24; 44) zum Entfernen an dem Anschlagmittel (22) hängt,
wobei:
- das besagte Ende (36B) der Führungsplatte (36) an dem ersten Tragelement (40) befestigt ist, und
- die beiden Tragelemente (40, 48) aneinander befestigt sind, um die Drehachsen ihrer Riemenscheibenrollen (38; 46) komplanar zu halten, und sodass sich die beiden Führungsarme (42, 50) beiderseits der Ebene erstrecken, über die sich die Führungsplatte (36) erstreckt, wobei das zweite Tragelement (48) unter dem ersten Tragelement (40) angeordnet ist, wenn die Vorrichtung (24; 44) zum Entfernen an dem Anschlagmittel (22) hängt.

4. Vorrichtung (24; 44) zum Entfernen eines Kabels (10) nach Anspruch 3, wobei die beiden Tragelemente (40, 48) mithilfe einer Schwenkverbindung aneinander befestigt sind, deren Drehachse parallel zu der Ebene verläuft, über die sich die Führungsplatte (36) erstreckt.

5. Vorrichtung (24; 34; 44) zum Entfernen eines Kabels (10) nach einem der Ansprüche 1 bis 4, wobei jedes Tragelement (40; 40, 48) in einer Hakenform eines "G", beispielsweise gebildet durch zwei aneinander beigebrachte Flansche ist, im Inneren dessen die entsprechende Riemenscheibenrolle (38; 38, 46) gemäß einer Schwenkverbindung befestigt ist.

6. Vorrichtung (24; 34; 44) zum Entfernen eines Kabels (10) nach einem der Ansprüche 1 bis 5, wobei die Führungsplatte (36) in einer länglichen Birnenform mit zwei Enden ist, wobei das erste Ende (36A) winkelig ist und das zweite abgerundete Ende (36B) dem besagten Befestigungsende (36B) entspricht.

7. Vorrichtung (24; 34; 44) zum Entfernen eines Kabels (10) nach einem der Ansprüche 1 bis 6, wobei die Führungsplatte (36) und jedes Tragelement (40; 40, 48) Ausnehmungen aufweisen.

8. Vorrichtung (24; 34; 44) zum Entfernen eines Kabels (10) nach einem der Ansprüche 1 bis 7, einen zusätzlichen Haken oder Karabiner (52) zum Entfernen einer Last umfassend, der an dem einen der anderen Elemente befestigt ist, aus denen die Vorrichtung (24; 34; 44) zum Entfernen gebildet wird, um sich unterhalb aller dieser Elemente zu befinden, wenn die Vorrichtung (24; 34; 44) zum Entfernen an dem Anschlagmittel (22) hängt.

9. Verfahren zum Entfernen eines auf Strommasten (12, 14, 16, 18) montierten Kabels (10), die folgenden Schritte umfassend:
- Befestigung (100) an dem freien Ende eines Anschlagmittels (22), welches durch ein Hebezeug (20) getragen wird, einer Vorrichtung (24; 34; 44) zum Entfernen eines Kabels (10) nach einem der Ansprüche 1 bis 8, danach
- Bewegung (102) der Vorrichtung zum Entfernen (24; 34; 44), mithilfe des Hebezeugs (20), zu dem Kabel (10) hin, indem man die Vorrichtung zum Entfernen (24; 34; 44) im Wesentlichen unter dem Kabel (10) hält und indem man einen Kontakt zwischen dem Kabel (10) und dem Anschlagmittel (22) oder der Führungsplatte (36) herstellt, danach
- Anheben (104) der Vorrichtung zum Entfernen (24; 34; 44), mithilfe des Hebezeugs (20), indem man den Kontakt mit dem Kabel (10) hält, bis zu dem Eingriff von letzterem in die Nut der Riemenscheibenrolle (38; 38, 46) der Vorrichtung zum Entfernen (24; 34; 44) durch die Führung mithilfe der Platte (36) und des Führungsarmes (42; 42, 50).

10. Verfahren zum Entfernen eines Kabels (10) nach Anspruch 9, wobei das Kabel (10) ein Hochspannungs-Stromübertragungsleitungskabel ist, und das Hebezeug (20) ein Helikopter zum Tragen des Anschlagmittels (22) ist.

## Claims

1. Device (24; 34; 44) for lifting a cable (10) mounted on pylons (12, 14, 16, 18), the device being intended to be suspended from the free end of a sling (22) and comprising:
- a pulley sheave (38; 38, 46),
- an element (40; 40, 48) bearing the rotational axis of the pulley sheave (38; 38, 46), and
- an arm (42; 42, 50) for guiding the cable (10) as far as the engagement thereof inside a groove of the pulley sheave (38; 38, 46), the main axis of said guide arm (42; 42, 50) extending in an upwardly inclined manner in a plane containing the rotational axis of the pulley sheave (38; 38, 46), when the lifting device (24; 34; 44) is suspended from the sling (22),
**characterised in that** it further comprises a guide plate (36), extending in a plane intended to contain the sling (22), one end (36B) of which is attached to the bearing element (40) so as to maintain the plane in which extends the guide plate (36) substantially perpendicular to the plane containing the rotational axis of the pulley sheave (38; 38, 46) and the axis of the guide arm (42; 42, 50).

2. Device (24; 34; 44) for lifting a cable (10) according to claim 1, wherein said end (36B) of the guide plate (36) is attached to the bearing element (40) by means of a pivot connection, the rotational axis of which is parallel to the plane of the guide plate (36).

3. Device (24; 44) for lifting a cable (10) according to either claim 1 or claim 2, comprising:
- a first pulley sheave (38),
- a first element (40) bearing the rotational axis of the first pulley sheave (38),
- a first arm (42) for guiding the cable (10) towards a groove of the first pulley sheave (38), said first guide arm (42) extending in an upwardly inclined manner in a plane containing the rotational axis of the first pulley sheave (38), when the lifting device (24; 44) is suspended from the sling (22),
- a second pulley sheave (46),
- a second element (48) bearing the rotational axis of the second pulley sheave (46), and
- a second arm (50) for guiding the cable (10) towards a groove of the second pulley sheave (46), said second guide arm (50) extending in an upwardly inclined manner in a plane containing the rotational axis of the second pulley sheave (46), when the lifting device (24; 44) is suspended from the sling (22),
wherein:
- said end (36B) of the guide plate (36) is attached to the first bearing element (40), and
- the two bearing elements (40, 48) are secured to each other so as to maintain the rotational axes of the pulley sheaves (38, 46) thereof coplanar, and so that the two guide arms (42, 50) extend on either side of the plane in which the guide plate (36) extends, the second bearing element (48) being positioned beneath the first bearing element (40) when the lifting device (24; 44) is suspended from the sling (22).

4. Device (24; 44) for lifting a cable (10) according to claim 3, wherein the two bearing elements (40, 48) are secured to each other using a pivot connection, the rotational axis of which is parallel to the plane in which the guide plate (36) extends.

5. Device (24; 34; 44) for lifting a cable (10) according to any of claims 1 to 4, wherein each bearing element (40; 40, 48) takes on the shape of a "G"-shaped hook, for example constituted from two flanges placed against each other, inside which is secured the corresponding pulley sheave (38; 38, 46) via a pivot connection.

6. Device (24; 34; 44) for lifting a cable (10) according to any of claims 1 to 5, wherein the guide plate (36) takes on an oblong pear shape having two ends, the first end (36A) being angular and the second end (36B), being rounded, corresponding to said attachment end (36B).

7. Device (24; 34; 44) for lifting a cable (10) according to any of claims 1 to 6, wherein the guide plate (36) and each bearing element (40; 40, 48) have recesses.

8. Device (24; 34; 44) for lifting a cable (10) according to any of claims 1 to 7, comprising an additional hook or snap hook (52) for lifting a load secured to one of the other elements constituting the lifting device (24; 34; 44) such that it is positioned beneath all of said elements when the lifting device (24; 34; 44) is suspended from the sling (22).

9. Method for lifting a cable (10) mounted on pylons (12, 14, 16, 18), including the steps of:
- securing (100), to the free end of a sling (22) borne by a lifting machine (20), a device (24; 34; 44) for lifting a cable (10) according to any of claims 1 to 8, then
- moving (102), using the lifting machine (20), the lifting device (24; 34; 44) towards the cable (10) by maintaining the lifting device (24; 34; 44) essentially beneath the cable (10) and by creating a contact between the cable (10) and the sling (22) or the guide plate (36), then
- hoisting (104), using the lifting machine (20), the lifting device (24; 34; 44) while maintaining the contact with the cable (10), until the latter engages in the groove of the pulley sheave (38; 38, 46) of the lifting device (24; 34; 44) by guiding using the guide plate (36) and the guide arm (42; 42, 50).

10. Method for lifting a cable (10) according to claim 9, wherein the cable (10) is a cable of a high-voltage electricity transmission line and the lifting machine (20) is a helicopter carrying the sling (22).
